# FASCICULE DE BREVET EUROPEEN

(11) **EP 1 040 135 B1**
(45) Date de publication et mention de la délivrance du brevet: **26.11.2003**
(21) Numéro de dépôt: 98964507.2
(22) Date de dépôt: 10.12.1998
(51) Int. Cl.: C08F 6/02, C08F 14/00

(54) **PROCEDE DE PREPARATION D'UNE DISPERSION AQUEUSE DE POLYMERES, DISPERSION AQUEUSE OBTENUE ET UTILISATION DE CELLE-CI**
VERFAHREN ZUR HERSTELLUNG EINER WÄSSRIGEN POLYMERDISPERSION, DARAUS ERHALTENE POLYMERDISPERSION UND DEREN VERWENDUNG
METHOD FOR PREPARING AN AQUEOUS POLYMER DISPERSION, RESULTING AQUEOUS DISPERSION AND USE THEREOF

(30) Priorité: 19.12.1997 FR 9716444
(43) Date de publication de la demande: 04.10.2000
(73) Titulaire: SOLVAY (Société Anonyme), 1050 Bruxelles (BE)
(72) Inventeur: VANDERVEKEN, Yves, B-3000 LEUVEN (BE); GUENAIRE, Bernard, F-39500 Tavaux (FR); BACQUE, Xavier, F-39500 Tavaux (FR)
(74) Mandataire: Jacques, Philippe
(86) Numéro de dépôt international: EP9808145
(87) Numéro de publication internationale: WO99032523

(56) Documents cités:
- EP-A- 0 004 884
- EP-A- 0 268 042
- DE-A- 3 505 238
- US-A- 3 883 455

## Description

L'invention concerne un procédé de préparation d'une dispersion aqueuse de polymères vinyliques halogénés, la dispersion aqueuse obtenue et son utilisation pour l'enduction de substrats.

Les dispersions aqueuses de polymères vinyliques halogénés tels les polymères du chlorure de vinylidène et/ou du chlorure de vinyle se caractérisent après polymérisation, par un pH qui est généralement inférieur à environ 2. Malheureusement, ces dispersions aqueuses présentent à la fois une mauvaise compatibilité avec les cires qui se manifeste par une mauvaise stabilité mécanique et une mauvaise stabilité thermique de laquelle découlent des problèmes de scellabilité et des problèmes de corrosion du matériel de thermoformage lors de la réalisation de blisters pharmaceutiques.

Il est connu d'ajouter à ces dispersions aqueuses de polymères vinyliques halogénés se trouvant à un pH inférieur à environ 2, une certaine quantité d'agents basiques spécifiques de sorte que celles-ci se trouvent à un pH supérieur à environ 5.

Ainsi, la demande de brevet DE-A-2246499 divulgue l'ajout d'une certaine quantité d'ammoniaque à des dispersions aqueuses de copolymères du chlorure de vinyle et/ou du chlorure de vinylidène de sorte que celles-ci se trouvent à un pH supérieur ou égal à 5. Il est néanmoins nécessaire d'ajouter, aux dispersions aqueuses obtenues, en plus de l'ammoniaque, un composé époxydé pour éviter que celles-ci ne se colorent au cours du temps. Ce procédé présente l'inconvénient de devoir ajouter un composé époxydé aux dispersions aqueuses. Cet ajout supplémentaire entraîne en effet une augmentation des coûts et complique la réalisation des dispersions aqueuses de polymères halogénés.

La demande de brevet EP-A-0469405 décrit l'ajout à des dispersions aqueuses de polymères obtenues par polymérisation d'un mélange de monomères contenant 10 à 100 % en poids de monomères contenant des halogènes, d'un agent basique en quantité telle que le pH est réglé à une valeur comprise entre 5 et 10. Le procédé présenté par la demande de brevet EP-A-0469405 permet d'éviter l'usage d'un composé époxydé en plus de l'agent basique. Il a néanmoins été constaté que les dispersions aqueuses décrites dans cette demande de brevet ne donnent pas entière satisfaction quant à la stabilité de leur coloration au cours du temps.

La demande de brevet EP-A-0524497 enseigne, pour pallier les inconvénients présentés par le procédé de la demande de brevet EP-A-0469405, d'ajouter une substance active en plus de l'agent basique. Ce procédé présente néanmoins l'inconvénient de devoir ajouter une substance active aux dispersions aqueuses. Cet ajout supplémentaire entraîne nécessairement une augmentation des coûts et complique la réalisation des dispersions aqueuses de polymères halogénés.

Par ailleurs, la demande de brevet DE-A-3505238 divulgue un procédé de préparation d'une suspension aqueuse de polymères du chlorure de vinyle faisant intervenir l'ajout d'un agent basique de sorte que le pH de la suspension aqueuse soit compris entre 4 et 10.

Enfin, le brevet US-A-3883455 décrit des dispersions aqueuses de chlorure de polyvinylidène qui sont utilisées comme base aqueuse en mélange avec d'autres composants pour fabriquer des peintures à l'eau qui peuvent être utilisées pour peindre du bois présentant une haute teneur en composés phénoliques. L'application de telles compositions permet d'éviter la détérioration et l'exsudation de ces bois.

Afin de remédier aux inconvénients présentés par les procédés de l'art antérieur, la présente invention a pour objet un procédé qui est particulièrement adapté pour la préparation d'une dispersion aqueuse de polymères vinyliques halogénés qui présente une compatibilité avec les cires, une stabilité thermique et une stabilité de coloration au cours du temps qui sont améliorées par rapport à celles des dispersions aqueuses de polymères vinyliques halogénés de l'art antérieur, et qui évite de devoir ajouter un composé époxydé, une substance active et/ou une autre substance qui augmenteraient les coûts et/ou compliqueraient la réalisation des dispersions aqueuses de polymères halogénés.

L'invention a également pour objet une telle dispersion aqueuse de polymères vinyliques halogénés qui ne présente pas les inconvénients des dispersions aqueuses de polymères vinyliques halogénés de l'art antérieur.

L'invention a également pour objet l'utilisation de ladite dispersion aqueuse de polymères vinyliques halogénés pour l'enduction de substrats.

A cet effet, l'invention concerne un procédé de préparation d'une dispersion aqueuse de polymères vinyliques halogénés par polymérisation, selon lequel après polymérisation, on ajoute un agent basique en quantité telle que le pH de la dispersion aqueuse est inférieur à 5.

L'invention concerne également une dispersion aqueuse de polymères vinyliques halogénés, selon laquelle la dispersion aqueuse contient un agent basique en quantité telle que le pH est inférieur à 5.

La présente invention concerne également l'utilisation de la dispersion aqueuse de polymères vinyliques halogénés obtenue pour l'enduction de substrats polymères, en papier ou en cellulose régénérée.

Par agent basique, on entend désigner aux fins de la présente invention, tout matériel qui, lorsqu'il est ajouté à une dispersion aqueuse de polymères vinyliques halogénés, rend la dispersion aqueuse plus basique que ce qu'elle était auparavant. Plus précisément, par agent basique, on entend désigner tout matériel qui placé dans une solution aqueuse lui procure un pH supérieur à 2.

Selon l'invention, l'agent basique est choisi parmi les phosphates de métaux alcalins, les mélanges de ceux-ci entre eux ou avec un autre agent basique. L'agent basique particulièrement préféré est choisi parmi les phosphates n'ayant pas plus d'un atome de phosphore, les mélanges de ceux-ci entre eux ou avec un autre agent basique. Parmi les phosphates n'ayant pas plus d'un atome de phosphore, on peut citer, de manière non limitative, les phosphates trisodique et tripotassique, les phosphates disodique et dipotassique, les phosphates monosodique et monopotassique. Un agent basique tout particulièrement préféré est le phosphate trisodique (Na₃PO₄).

Un agent basique est l'hydroxyde de sodium.

Les hydroxydes de métaux alcalino-terreux sont des agents basiques. Parmi les hydroxydes de métaux alcalino-terreux, on peut citer, de manière non limitative, l'hydroxyde de calcium.

Les phosphites de métaux alcalins sont des agents basiques. Parmi les phosphites de métaux alcalins, on peut citer de manière non limitative, les phosphites trisodique et tripotassique, les phosphites disodique et dipotassique, les phosphites monosodique et monopotassique.

Les carbonates de métaux alcalins sont des agents basiques. Parmi les carbonates de métaux alcalins, on peut citer, de manière non limitative, le carbonate de sodium, le carbonate de potassium et le bicarbonate de potassium.

Les citrates de métaux alcalins sont des agents basiques. Parmi les citrates de métaux alcalins, on peut citer, de manière non limitative, le citrate de sodium et le citrate de potassium.

Les acétates de métaux alcalins sont des agents basiques. Parmi les acétates de métaux alcalins, on peut citer, de manière non limitative, l'acétate de sodium et l'acétate de potassium.

Les formiates de métaux alcalins sont des agents basiques. Parmi les formiates de métaux alcalins, on peut citer, de manière non limitative, le formiate de sodium et le formiate de potassium.

Les oxydes de métaux alcalins sont des agents basiques.

La quantité d'agent basique à ajouter à la dispersion aqueuse sera telle que le pH de la dispersion aqueuse est inférieur à environ 5.

Le pH de la dispersion aqueuse est réglé généralement à une valeur inférieure à 5, de préférence à une valeur inférieure ou égale à 4,5, de manière particulièrement préférée à une valeur inférieure ou égale à 4 et de manière tout particulièrement préférée inférieure ou égale à 3,5.

De plus, le pH de la dispersion aqueuse est de préférence supérieur à 2.

Le réglage du pH de la dispersion aqueuse est effectué après la polymérisation c'est-à-dire à tout moment allant du dégazage et de la mise sous vide de l'autoclave jusqu'au moment de l'emploi de la dispersion aqueuse. De préférence, le réglage du pH de la dispersion aqueuse est effectué immédiatement après la polymérisation c'est-à-dire juste après le dégazage et la mise sous vide de l'autoclave.

Par dispersion aqueuse, également appelée latex, on entend désigner aux fins de la présente invention, la dispersion de polymère dans l'eau obtenue après polymérisation radicalaire en émulsion aqueuse. La dispersion aqueuse est habituellement caractérisée par une concentration en solides d'environ au moins 45 % en poids. La dispersion aqueuse est habituellement caractérisée par une concentration en solides d'environ au plus 70 % en poids. En général, les particules polymères élémentaires dans la dispersion aqueuse présentent des diamètres moyens d'environ au moins 0,1 µm. Les particules polymères élémentaires dans la dispersion aqueuse présentent habituellement des diamètres moyens d'environ au plus 0,2 µm.

Par polymérisation radicalaire en émulsion aqueuse, on entend désigner aux fins de la présente invention, tout procédé de polymérisation radicalaire s'effectuant en milieu aqueux en présence d'agents émulsionnants et d'initiateurs radicalaires. Cette définition englobe spécifiquement la polymérisation en émulsion aqueuse dite "classique" dans laquelle on met en oeuvre des initiateurs radicalaires hydrosolubles, ainsi que la polymérisation en microsuspension, encore appelée en dispersion aqueuse homogénéisée, dans laquelle on met en oeuvre des initiateurs oléosolubles et on réalise une émulsion de gouttelettes de monomères grâce à une agitation mécanique puissante et la présence d'agents émulsionnants.

L'invention est particulièrement adaptée à la polymérisation en émulsion aqueuse "classique" qui s'effectue dans les conditions connues de l'homme du métier. C'est ainsi que la polymérisation s'effectue à l'intervention d'agents émulsionnants et d'initiateurs hydrosolubles, présents en des quantités connues de l'homme du métier.

A titre d'exemples d'agents émulsionnants, on peut mentionner les agents émulsionnants anioniques et les agents émulsionnants non ioniques. Parmi les agents émulsionnants anioniques, on peut citer de manière non limitative, les paraffines sulfonates, les alkylsulfates, les alkylsulfonates, les alkylaryl mono ou disulfonates et les alkylsulfosuccinates. Parmi les agents émulsionnants non ioniques, on peut citer de manière non limitative, les dérivés alkyl- ou alkylaryléthoxylés.

A titre d'exemples d'initiateurs hydrosolubles, on peut mentionner les peroxydes hydrosolubles tels que les persulfates de métaux alcalins ou d'ammonium, le peroxyde d'hydrogène, les perborates, l'hydroperoxyde de t-butyle, utilisés seuls ou en association avec un réducteur.

Par polymères vinyliques halogénés, on entend désigner aux fins de la présente invention, les polymères obtenus par polymérisation radicalaire en émulsion aqueuse de monomères vinyliques halogénés c'est-à-dire aussi bien les homopolymères des monomères vinyliques halogénés que les copolymères qu'ils forment entre eux ou avec d'autres monomères copolymérisables avec eux comme par exemple les esters vinyliques, les éthers vinyliques, les acides, esters, nitriles et amides acryliques, les dérivés styréniques et les oléfines.

Par monomère vinylique halogéné, on entend désigner aux fins de la présente invention, tout monomère polymérisable par voie radicalaire possédant une insaturation oléfinique terminale et substitué par au moins un atome d'halogène. De préférence, ces monomères sont choisis parmi les dérivés substitués de l'éthylène et du propylène et ne comportent que deux ou trois atomes de carbone respectivement. A titre d'exemples non limitatifs de pareils monomères, on peut citer le chlorure de vinyle, le chlorure de vinylidène, le bromure de vinyle, le fluorure de vinyle, le fluorure de vinylidène, le trifluoroéthylène, le tétrafluoroéthylène, le chlorotrifluoroéthylène et l'hexafluoropropylène. De préférence, les atomes d'halogène sont choisis parmi les atomes de chlore et de fluor.

L'invention est particulièrement adaptée à la polymérisation des monomères contenant du chlore comme le chlorure de vinyle et le chlorure de vinylidène. Les polymères vinyliques halogénés préférés sont donc des polymères contenant du chlore.

Par polymères contenant du chlore, on entend donc désigner aux fins de la présente invention, aussi bien les homopolymères que les copolymères de monomères vinyliques contenant du chlore notamment les homopolymères de monomères vinyliques contenant du chlore tels que le chlorure de vinyle et le chlorure de vinylidène ainsi que les copolymères faisant intervenir le chlorure de vinyle et le chlorure de vinylidène et les copolymères du chlorure de vinyle et/ou du chlorure de vinylidène avec d'autre(s) monomère(s) copolymérisables avec eux choisi parmi les esters vinyliques tels que par exemple l'acétate de vinyle, les éthers vinyliques, les acides, esters, nitriles et amides acryliques, les dérivés styréniques et les oléfines telles le butadiène et l'éthylène.

De manière plus que préférée, les polymères contenant du chlore sont des polymères du chlorure de vinylidène.

Par polymères du chlorure de vinylidène, on entend désigner tous les polymères contenant au moins 50 % en poids, et de préférence 60 % en poids, de chlorure de vinylidène. Les polymères du chlorure de vinylidène selon l'invention désignent donc aussi bien les homopolymères du chlorure de vinylidène que ses copolymères contenant des unités monomères dérivées d'un ou de plusieurs comonomères tels que, par exemple, le chlorure de vinyle, les acrylates d'alkyle, les méthacrylates d'alkyle, l'acide acrylique, l'acide méthacrylique, l'acrylonitrile, le méthacrylonitrile, les amides acryliques et les amides méthacryliques, les oléfines telles que le butadiène et l'éthylène. Les acrylates et méthacrylates d'alkyle ont généralement un groupe alkyle comprenant de 1 à 8 atomes de carbone. De préférence, les acrylates et méthacrylates d'alkyle ont un groupe alkyle comprenant de 1 à 4 atomes de carbone. L'acrylate de méthyle, l'acrylate d'éthyle et le méthacrylate de méthyle sont particulièrement préférés.

Il est particulièrement avantageux d'appliquer le procédé de l'invention aux copolymères contenant de 60 à 95 % en poids de chlorure de vinylidène.

Les dispersions aqueuses de polymères vinyliques halogénés selon l'invention sont particulièrement adaptées pour contenir une cire.

Par cire, on entend désigner aux fins de la présente invention, toute cire naturelle ou artificielle. A titre d'exemples non limitatifs, on peut citer la cire de Carnauba, la cire d'abeille, la cire de Chine, l' ozokérite, les cires de polyoléfines et les cires de Montane estérifiées.

La quantité de cire habituellement ajoutée à la dispersion aqueuse de polymère du chlorure de vinylidène est d'au moins 2 g/kg en matières sèches, de préférence d'au moins 3 g/kg en matières sèches. Habituellement, la quantité de cire ajoutée est d'au plus 30 g/kg en matières sèches, de préférence d'au plus 20 g/kg en matières sèches.

Les dispersions aqueuses de polymères vinyliques halogénés selon l'invention sont utilisées pour l'enduction de substrats polymères, en papier ou en cellulose régénérée.

De préférence, les dispersions aqueuses de polymères vinyliques halogénés selon l'invention sont utilisées pour la réalisation de blisters pharmaceutiques. De manière particulièrement préférée, les dispersions aqueuses de polymères vinyliques halogénés selon l'invention sont utilisées pour l'enduction de substrats polymères qui donnent lieu à la réalisation de blisters pharmaceutiques.

Par enduction, on entend désigner aux fins de la présente invention, tout procédé qui consiste à enduire la dispersion aqueuse de polymères vinyliques halogénés sur un support qui est habituellement un substrat polymère, du papier ou de la cellulose régénérée. A titre d'exemples non limitatifs de procédés d'enduction, on peut citer l'enduction par lame d'air et l'enduction par rouleau gravé.

Les substrats polymères pouvant être enduits par la dispersion aqueuse selon l'invention sont par exemple le chlorure de polyvinyle, les polyesters, les polyamides et le polypropylène.

Les dispersions aqueuses de polymères vinyliques halogénés selon l'invention, contenant un agent basique en quantité telle que le pH de la dispersion aqueuse est inférieur à 5 (et supérieur à 2), présentent une bonne comptabilité avec les cires qui se manifeste par une bonne stabilité mécanique, une bonne stabilité thermique de laquelle découlent une bonne scellabilité lors de la réalisation de blisters pharmaceutiques et une bonne stabilité de coloration au cours du temps. Par ailleurs, il n'apparaît aucun problème de corrosion du matériel de thermoformage lors de la réalisation de blisters pharmaceutiques.

En effet, les dispersions aqueuses selon l'invention, contenant un agent basique en quantité telle que le pH de la dispersion aqueuse est inférieur à 5 (et supérieur à 2), présentent une compatibilité avec les cires, utilisées comme agent anti-blocking, nettement améliorée par rapport aux dispersions aqueuses de l'art antérieur ne contenant pas d'agent basique et se trouvant à un pH inférieur à 2.

Les dispersions aqueuses selon l'invention, contenant un agent basique en quantité telle que le pH de la dispersion aqueuse est inférieur à 5 (et supérieur à 2) présentent une coloration plus stable au cours du temps que les dispersions aqueuses de l'art antérieur contenant un agent basique en quantité telle que le pH de la dispersion aqueuse est supérieur à 5, sans qu'il ne soit nécessaire d'y ajouter un composé époxydé, une substance active et/ou une autre substance qui augmenteraient les coûts et/ou compliqueraient la réalisation des dispersions aqueuses de polymères halogénés.

Lorsque les dispersions aqueuses selon l'invention sont enduites sur un substrat polymère, en papier ou en cellulose régénérée, on observe alors un très faible dégagement d'acide chlorhydrique à 160 °C, signe d'une très bonne stabilité thermique au contraire des dispersions aqueuses de polymères vinyliques halogénés de l'art antérieur ne contenant pas d'agent basique et se trouvant à un pH inférieur à 2. De plus, lors de l'utilisation des dispersions aqueuses selon l'invention pour la réalisation de blisters pharmaceutiques, la scellabilité des films est remarquable et on n'observe pas de problème de corrosion du matériel de thermoformage au contraire des dispersions aqueuses de polymères vinyliques halogénés de l'art antérieur ne contenant pas d'agent basique et se trouvant à un pH inférieur à 2.

Les dispersions aqueuses selon l'invention présentent de plus un très faible pourcentage de grumeaux, signe d'une très bonne stabilité mécanique. Les dispersions aqueuses selon l'invention se caractérisent également par une filmogénéité améliorée.

Les exemples qui suivent sont destinés à illustrer la présente invention.

### Exemple 1 de référence : Préparation d'une dispersion aqueuse de polymère du chlorure de vinylidène

On a obtenu une dispersion aqueuse du copolymère de chlorure de vinylidène, d'acrylate de méthyle et de chlorure de vinyle IXAN® PA 331 (SOLVAY). On a ajouté à cette dispersion aqueuse la quantité nécessaire d'hydroxyde de sodium, sous forme d'une solution aqueuse 2N, pour amener le pH de la dispersion aqueuse à 4.

Le pH de la dispersion aqueuse obtenue a été mesuré par lecture au pH-mètre, à 20 °C, sans dilution. La teneur en matières sèches a été déterminée par séchage à la thermobalance jusqu'à poids constant, avec un programme de température ne dépassant pas 110 °C. Le poids spécifique a été déterminé à 20 °C avec un densimètre utilisant la technique de mesure différentielle d'oscillations d'une cellule remplie de liquide (appareil PAAR DMA 46). La tension superficielle a été mesurée à 20 °C par la méthode de la plaque selon Wilhelmy (appareil KRÜSS). La stabilométrie (pourcentage en poids de grumeaux) qui est une mesure de la stabilité mécanique à vitesse élevée, a été mesurée selon la norme ISO 2006 en ajoutant 100 ppm d'un antimousse fluoré de type FLUOWET® PP. La filmogénéité a été mesurée de la manière suivante : une plaquette de verre, préalablement dégraissée, est trempée dans le latex filtré sur 60 µm. Elle est ensuite mise à sécher dans un courant d'air à 23 °C (débit : 2 l/minute). On mesure ensuite l'extinction d'un faisceau de lumière blanche (exprimée en µA) après avoir étalonner à 100 µA l'extinction du faisceau de lumière blanche pour une lame non enduite.

Les résultats de pH, de teneur en matières sèches, de poids spécifique, de tension superficielle, de stabilométrie et de filmogénéité mesurés sur la dispersion aqueuse du polymère de chlorure de vinylidène obtenue après l'ajout d'hydroxyde de sodium sont récapitulés au tableau I.

### Exemple 2: Préparation d'une dispersion aqueuse de polymère du chlorure de vinylidène

On a obtenu une dispersion aqueuse du copolymère de chlorure de vinylidène, d'acrylate de méthyle et de chlorure de vinyle IXAN® PA 331 (SOLVAY). On a ajouté à cette dispersion aqueuse la quantité nécessaire de phosphate trisodique (Na₃PO₄.12H₂O), sous forme d'une solution aqueuse à 100 g/litre, pour amener le pH de la dispersion aqueuse à 3,6.

Le pH, la teneur en matières sèches, le poids spécifique, la tension superficielle, la stabilométrie et la filmogénéité ont été mesurés, de la même manière qu'à l'exemple 1, sur la dispersion aqueuse du polymère de chlorure de vinylidène obtenue après l'ajout de phosphate trisodique.

Les résultats de ces différentes mesures sont récapitulés au tableau I.

### Exemple 3 (exemple de comparaison)

On a obtenu une dispersion aqueuse du copolymère de chlorure de vinylidène, d'acrylate de méthyle et de chlorure de vinyle IXAN® PA 331 (SOLVAY).

Le pH, la teneur en matières sèches, le poids spécifique, la tension superficielle, la stabilométrie et la filmogénéité ont été mesurés, de la même manière qu'à l'exemple 1, sur la dispersion aqueuse du polymère de chlorure de vinylidène à laquelle il n'a pas été ajouté d'agent basique.

Les résultats de ces différentes mesures sont récapitulés au tableau I.

**TABLEAU I**

| Exemple | pH | Matières sèches; % en poids | Poids spécifique; kg/dm³ | Tension superficielle; mN/m | Stabilométrie; % en poids de grumeaux | Filmogénéité; µA |
|---|---|---|---|---|---|---|
| 1 | 4 | 60 | 1,32 | 35 | 0,45 | >90 |
| 2 | 3,6 | 60 | 1,32 | 34 | 0,14 | >90 |
| 3 | 2 | 60 | 1,32 | 34 | 0,36 | 76 |

### Exemple 4 : Préparation d'une dispersion aqueuse de polymère du chlorure de vinylidène

On a obtenu une dispersion aqueuse du copolymère de chlorure de vinylidène et d'acrylate de méthyle IXAN® PA 114 (SOLVAY). On a ajouté à cette dispersion aqueuse la quantité nécessaire de phosphate trisodique (Na₃PO₄.12H₂O), sous forme d'une solution aqueuse à 100 g/litre, pour amener le pH de la dispersion aqueuse à 4,1.

Le pH, la teneur en matières sèches, le poids spécifique, la tension superficielle, la stabilométrie et la filmogénéité ont été mesurés, de la même manière qu'à l'exemple 1, sur la dispersion aqueuse du polymère de chlorure de vinylidène obtenue après l'ajout de phosphate trisodique.

Les résultats de ces différentes mesures sont récapitulés au tableau II.

### Exemple 5 (exemple de comparaison)

On a obtenu une dispersion aqueuse du copolymère de chlorure de vinylidène et d'acrylate de méthyle IXAN® PA 114 (SOLVAY).

Le pH, la teneur en matières sèches, le poids spécifique, la tension superficielle, la stabilométrie et la filmogénéité ont été mesurés, de la même manière qu'à l'exemple 1, sur la dispersion aqueuse du polymère de chlorure de vinylidène à laquelle il n'a pas été ajouté d'agent basique.

Les résultats de ces différentes mesures sont récapitulés au tableau II.

**TABLEAU II**

| Exemple | pH | Matières sèches; % en poids | Poids spécifique; kg/dm³ | Tension superficielle; mN/m | Stabilométrie; % en poids de grumeaux | Filmogénéité; µA |
|---|---|---|---|---|---|---|
| 4 | 4,1 | 60 | 1,33 | 43 | 0,34 | >90 |
| 5 | 1,8 | 60 | 1,33 | 43 | 1,08 | >90 |

### Exemple 6 : Utilisation des dispersions aqueuses obtenues aux exemples 1 à 3 pour l'enduction d'un film de chlorure de polyvinyle

Les dispersions aqueuses de polymère du chlorure de vinylidène préparées aux exemples 1 à 3 ont été utilisées pour enduire chacune un film de chlorure de polyvinyle. Les trois films enduits obtenus ont été respectivement désignés enduit 1 (préparé avec la dispersion aqueuse de l'exemple 1), enduit 2 (préparé avec la dispersion aqueuse de l'exemple 2) et enduit 3 (préparé avec la dispersion aqueuse de l'exemple 3).

Sur une machine d'enduction type Jagenberg, une couche du promoteur d'adhésion ADCOTE® 376 a tout d'abord été déposée sur chaque film de chlorure de polyvinyle par la technique du "reverse roll coating". Les trois films obtenus ont ensuite été soumis à un traitement Corona avant d'être enduits chacun respectivement par une des dispersions aqueuses de polymère du chlorure de vinylidène préparées aux exemples 1 à 3, par la technique d'enduction par lame d'air, avec une vitesse d'enduction de 15 m/minute. Le rouleau enducteur avait une vitesse de 60 tours/minute. Les trois films enduits ont ensuite été séchés dans un tunnel de séchage dans lequel la température dans les deux zones était de 80 °C; la température mesurée au sein de chaque enduit à ce moment était de 70 °C. L'épaisseur de la couche de polymère du chlorure de vinylidène déposée en deux passages sur chaque film de chlorure de polyvinyle était de 40 g de polymère du chlorure de vinylidène sec par m² de film.

La perméabilité à la vapeur d'eau de chaque film enduit a été mesurée selon la norme ASTM E96-80 à 38 °C et 90 % d'humidité relative. Le dégagement d'acide chlorhydrique (HCl) de chaque film enduit a été mesurée de la manière suivante : on pèse une quantité de 1 g ± 0,1 mg d'échantillon dans une nacelle qui est transférée à l'intérieur d'un récipient cylindrique en pyrex maintenu à 160 °C dans un bain d'huile. Ce récipient est entouré d'une série de spires dont une extrémité communique avec le fond du cylindre. L'autre extrémité est raccordée au circuit d'air comprimé. La sortie du cylindre est connectée via un fin tube de polytétrafluoroéthylène à la cellule de mesure. L'air, réchauffé par passage dans les spires, balaye l'échantillon et entraîne l'acide chlorhydrique éventuellement formé. Le flux gazeux traverse une solution tampon acétate de sodium - acide acétique. Les ions Cl⁻ retenus dans ce tampon sont dosés par potentiométrie directe à l'aide d'une électrode sensible aux ions Cl⁻. La différence de potentiel mesuré entre cette électrode indicatrice et une électrode de référence est enregistrée en continu. Cette mesure est comparée à une courbe d'étalonnage préalablement établie. Cette comparaison permet de déterminer la teneur en chlorure à un moment déterminé et donc la quantité d'acide chlorhydrique dégagé à cet instant.

Les résultats de la perméabilité à la vapeur d'eau des 3 films enduits et de leur dégagement d'acide chlorhydrique sont récapitulés au tableau III.

**TABLEAU III**

| Enduit | pH | Perméabilité à la vapeur d'eau; g/m².jour | Dégagement d'HCl après 30 minutes à 160 °C; mg HCl/kg | Dégagement d'HCl après 60 minutes à 160 °C; mg HCl/kg |
|---|---|---|---|---|
| 1 | 4 | 0,9 | 10 | 92 |
| 2 | 3,6 | 0,9 | 5 | 76 |
| 3 | 2 | 0,9 | 21 | 171 |

### Exemple 7 : Utilisation des dispersions aqueuses obtenues aux exemples 4 et 5 pour l'enduction d'un film de chlorure de polyvinyle

Les dispersions aqueuses de polymère du chlorure de vinylidène préparées aux exemples 4 et 5 ont été utilisées pour enduire chacune un film de chlorure de polyvinyle. Les deux films enduits obtenus ont été respectivement désignés enduit 4 (préparé avec la dispersion aqueuse de l'exemple 4), et enduit 5 (préparé avec la dispersion aqueuse de l'exemple 5).

Sur une machine d'enduction type Jagenberg, une couche du promoteur d'adhésion ADCOTE® 376 a tout d'abord été déposée sur chaque film de chlorure de polyvinyle par la technique du "reverse roll coating". Les deux films obtenus ont ensuite été soumis à un traitement Corona avant d'être enduits, sur une machine d'enduction type Bachofen, chacun respectivement par une des dispersions aqueuses de polymère du chlorure de vinylidène préparées aux exemples 4 et 5, par la technique d'enduction par rouleau gravé, avec une vitesse d'enduction de 60 m/minute. La vitesse du rouleau gravé (tournant en sens inverse), était de 75 tours/minute. Les deux films enduits ont ensuite été séchés dans un tunnel de séchage dans lequel la température dans les trois zones était de 110-107-90 °C; la température mesurée au sein de chaque enduit à ce moment était de 75 °C. L'épaisseur de la couche de polymère du chlorure de vinylidène déposée en plusieurs passages sur chaque film de chlorure de polyvinyle était de 40 g de polymère du chlorure de vinylidène sec par m² de film.

La perméabilité à la vapeur d'eau des deux films enduits et leur dégagement d'acide chlorhydrique ont été mesurés de la même manière qu'à l'exemple 6.

Les résultats de ces mesures sont récapitulés au tableau IV.

**TABLEAU IV**

| Enduit | pH | Perméabilité à la vapeur d'eau; g/m².jour | Dégagement d'HCl après 30 minutes à 160 °C; mg HCl/kg | Dégagement d'HCl après 60 minutes à 160 °C; mg HCl/kg |
|---|---|---|---|---|
| 4 | 4,1 | 0,6 | 38 | 312 |
| 5 | 1,8 | 0,6 | 199 | 941 |

### Exemple 8 : Préparation d'une dispersion aqueuse de polymère du chlorure de vinylidène contenant une cire

On a obtenu une dispersion aqueuse du copolymère de chlorure de vinylidène et d'acrylate de méthyle IXAN® PA 114 (SOLVAY). On a ajouté à cette dispersion aqueuse la quantité nécessaire de phosphate trisodique (Na₃PO₄.12H₂O), sous forme d'une solution aqueuse à 100 g/litre, pour amener le pH de la dispersion aqueuse à 2,3. On a ensuite ajouté à la dispersion aqueuse, sous agitation faible, sans dilution et pendant un temps de 15 à 30 minutes, l'équivalent de 20 g/kg en matières sèches d'une émulsion aqueuse de cire X 100 K vendue par SOLVAY.

Le pH, la teneur en matières sèches, la tension superficielle et la stabilométrie ont été mesurés, de la même manière qu'à l'exemple 1, sur la dispersion aqueuse du polymère de chlorure de vinylidène obtenue après l'ajout de phosphate trisodique et de cire.

Les résultats de ces différentes mesures sont récapitulés au tableau V.

### Exemple 9 (exemple de comparaison)

On a obtenu une dispersion aqueuse du copolymère de chlorure de vinylidène et d'acrylate de méthyle IXAN® PA 114 (SOLVAY). On a ajouté à cette dispersion aqueuse, sous agitation faible, sans dilution et pendant un temps de 15 à 30 minutes, l'équivalent de 20 g/kg en matières sèches d'une émulsion aqueuse de cire X 100 K vendue par SOLVAY.

Le pH, la teneur en matières sèches, la tension superficielle et la stabilométrie ont été mesurés, de la même manière qu' à l'exemple 1, sur la dispersion aqueuse du polymère de chlorure de vinylidène à laquelle il n'a pas été ajouté d'agent basique mais bien une cire.

Les résultats de ces différentes mesures sont récapitulés au tableau V.

### Exemple 10 (exemple de comparaison)

On a obtenu une dispersion aqueuse du copolymère de chlorure de vinylidène et d'acrylate de méthyle IXAN® PA 114 (SOLVAY).

Le pH, la teneur en matières sèches, la tension superficielle et la stabilométrie ont été mesurés, de la même manière qu'à l'exemple 1, sur la dispersion aqueuse du polymère de chlorure de vinylidène à laquelle il n'a pas été ajouté d'agent basique ni de cire.

Les résultats de ces différentes mesures sont récapitulés au tableau V et au tableau VI.

**TABLEAU V**

| Exemple | pH | Matières sèches; % en poids | Tension superficielle; mN/m | Stabilométrie; % en poids de grumeaux |
|---|---|---|---|---|
| 8 | 2,3 | 58 | 44 | 5,8 |
| 9 | 1,5 | 58 | 44 | 8,6 |
| 10 | 1,5 | 58 | 44 | 0,14 |

### Exemple 11 : Préparation d'une dispersion aqueuse de polymère du chlorure de vinylidène contenant une cire

On a obtenu une dispersion aqueuse du copolymère de chlorure de vinylidène et d'acrylate de méthyle IXAN® PA 114 (SOLVAY). On a ajouté à cette dispersion aqueuse la quantité nécessaire de phosphate trisodique (Na₃PO₄.12H₂O), sous forme d'une solution aqueuse à 100 g/litre, pour amener le pH de la dispersion aqueuse à 2,3. On a ensuite ajouté à la dispersion aqueuse, sous agitation faible, sans dilution et pendant un temps de 15 à 30 minutes, l'équivalent de 20 g/kg en matières sèches d'une émulsion aqueuse de cire MICHEM®LUBE 160 vendue par Michelman.

Le pH, la teneur en matières sèches, la tension superficielle et la stabilométrie ont été mesurés, de la même manière qu'à l'exemple 1, sur la dispersion aqueuse du polymère de chlorure de vinylidène obtenue après l'ajout de phosphate trisodique et de cire.

Les résultats de ces différentes mesures sont récapitulés au tableau VI.

### Exemple 12 (exemple de comparaison)

On a obtenu une dispersion aqueuse du copolymère de chlorure de vinylidène et d'acrylate de méthyle IXAN® PA 114 (SOLVAY). On a ajouté à cette dispersion aqueuse, sous agitation faible, sans dilution et pendant un temps de 15 à 30 minutes, l'équivalent de 20 g/kg en matières sèches d'une émulsion aqueuse de cire MICHEM®LUBE 160 vendue par Michelman.

Le pH, la teneur en matières sèches, la tension superficielle et la stabilométrie ont été mesurés, de la même manière qu'à l'exemple 1, sur la dispersion aqueuse du polymère de chlorure de vinylidène à laquelle il n'a pas été ajouté d'agent basique mais bien une cire.

Les résultats de ces différentes mesures sont récapitulés au tableau VI.

**TABLEAU VI**

| Exemple | pH | Matières sèches; % en poids | Tension superficielle; mN/m | Stabilométrie; % en poids de grumeaux |
|---|---|---|---|---|
| 11 | 2,3 | 58 | 44 | 0,07 |
| 12 | 1,5 | 58 | 44 | 0,17 |
| 10 | 1,5 | 58 | 44 | 0,14 |

### Exemple 13 : Préparation d'une dispersion aqueuse de polymère du chlorure de vinylidène

On a obtenu une dispersion aqueuse du copolymère de chlorure de vinylidène IXAN® PA 232 (SOLVAY) qui présente une coloration blanche. On a ajouté à cette dispersion aqueuse la quantité nécessaire de phosphate trisodique (Na₃PO₄.12H₂O), sous forme d'une solution aqueuse à 100 g/litre, pour amener le pH de la dispersion aqueuse à 4.

Le pH a été mesuré de la même manière qu'à l'exemple 1.

L'observation de la coloration de la dispersion aqueuse obtenue a indiqué une coloration blanche légèrement cassé jaune après 48 heures.

### Exemple 14 (exemple de comparaison)

On a obtenu une dispersion aqueuse du copolymère de chlorure de vinylidène IXAN® PA 232 (SOLVAY) qui présente une coloration blanche. On a ajouté à cette dispersion aqueuse la quantité nécessaire de phosphate trisodique (Na₃PO₄.12H₂O), sous forme d'une solution aqueuse à 100 g/litre, pour amener le pH de la dispersion aqueuse à 7.

Le pH a été mesuré de la même manière qu'à l'exemple 1.

L'observation de la coloration de la dispersion aqueuse juste après l'ajout de phosphate trisodique a indiqué une coloration jaune vanille.

### Exemple 15 : Préparation d'une dispersion aqueuse de polymère du chlorure de vinylidène

On a obtenu une dispersion aqueuse du copolymère de chlorure de vinylidène et d'acrylate de méthyle IXAN® PA 114 (SOLVAY) qui présente une coloration blanche. On a ajouté à cette dispersion aqueuse la quantité nécessaire de phosphate trisodique (Na₃PO₄.12H₂O), sous forme d'une solution aqueuse à 100 g/litre, pour amener le pH de la dispersion aqueuse à 2,6.

Le pH, la teneur en matières sèches et la stabilométrie ont été mesurés de la même manière qu'à l'exemple 1, sur la dispersion aqueuse du polymère de chlorure de vinylidène obtenue après l'ajout de phosphate trisodique.

L'observation de la coloration de la dispersion aqueuse, 2 heures après l'ajout de phosphate trisodique, a indiqué une coloration blanche.

Les résultats de ces différentes mesures sont récapitulées au tableau VII.

### Exemple 16 : Préparation d'une dispersion aqueuse de polymère du chlorure de vinylidène

On a obtenu une dispersion aqueuse du copolymère de chlorure de vinylidène et d'acrylate de méthyle IXAN® PA 114 (SOLVAY) qui présente une coloration blanche. On a ajouté à cette dispersion aqueuse la quantité nécessaire de phosphate trisodique (Na₃PO₄.12H₂O), sous forme d'une solution aqueuse à 100 g/litre, pour amener le pH de la dispersion aqueuse à 4,55.

Le pH, la teneur en matières sèches et la stabilométrie ont été mesurés de la même manière qu'à l'exemple 1, sur la dispersion aqueuse du polymère de chlorure de vinylidène obtenue après l'ajout de phosphate trisodique.

L'observation de la coloration de la dispersion aqueuse, 2 heures après l'ajout de phosphate trisodique, a indiqué une coloration légèrement rosée.

Les résultats de ces différentes mesures sont récapitulées au tableau VII.

### Exemple 17 (exemple de comparaison)

On a obtenu une dispersion aqueuse du copolymère de chlorure de vinylidène et d'acrylate de méthyle IXAN® PA 114 (SOLVAY) qui présente une coloration blanche. On a ajouté à cette dispersion aqueuse la quantité nécessaire de phosphate trisodique (Na₃PO₄.12H₂O), sous forme d'une solution aqueuse à 100 g/litre, pour amener le pH de la dispersion aqueuse à 7.

Le pH, la teneur en matières sèches et la stabilométrie ont été mesurés de la même manière qu'à l'exemple 1, sur la dispersion aqueuse du polymère de chlorure de vinylidène obtenue après l'ajout de phosphate trisodique.

L'observation de la coloration de la dispersion aqueuse, 2 heures après l'ajout de phosphate trisodique, a indiqué une coloration jaune saumonée.

Les résultats de ces différentes mesures sont récapitulées au tableau VII.

### Exemple 18 (exemple de comparaison)

On a obtenu une dispersion aqueuse du copolymère de chlorure de vinylidène et d' acrylate de méthyle IXAN® PA 114 (SOLVAY) qui présente une coloration blanche.

Le pH, la teneur en matières sèches et la stabilométrie ont été mesurés de la même manière qu'à l'exemple 1, sur la dispersion aqueuse du polymère de chlorure de vinylidène à laquelle il n'a pas été ajouté d'agent basique.

Les résultats de ces différentes mesures sont récapitulées au tableau VII.

**TABLEAU VII**

| Exemple | pH | Matières sèches ; % en poids | Coloration | Stabilométrie ; % en poids de grumeaux |
|---|---|---|---|---|
| 15 | 2,6 | 59 | Blanche | 0,73 |
| 16 | 4,55 | 59 | Légèrement rosée | 0,64 |
| 17 | 7 | 58 | Jaune saumonée | 0,9 |
| 18 | 1,65 | 60 | Blanche | 1,1 |

## Revendications

1. Procédé de préparation d'une dispersion aqueuse de polymères vinyliques halogénés par polymérisation, **caractérisé en ce qu'**après polymérisation, on ajoute un agent basique choisi parmi les phosphates de métaux alcalins, les mélanges de ceux-ci entre eux ou avec un autre agent basique, en quantité telle que le pH de la dispersion aqueuse est inférieur à 5.

2. Procédé de préparation d'une dispersion aqueuse de polymères vinyliques halogénés selon la revendication 1, **caractérisé en ce que** l'agent basique est le phosphate trisodique.

3. Procédé de préparation d'une dispersion aqueuse de polymères vinyliques halogénés selon l'une quelconque des revendications 1 à 2, **caractérisé en ce que** le pH de la dispersion aqueuse est supérieur à 2.

4. Procédé de préparation d'une dispersion aqueuse de polymères vinyliques halogénés selon l'une quelconque des revendications 1 à 3, **caractérisé en ce que** les polymères vinyliques halogénés sont des polymères contenant du chlore.

5. Procédé de préparation d'une dispersion aqueuse de polymères vinyliques halogénés selon l'une quelconque des revendications 1 à 4, **caractérisé en ce que** les polymères vinyliques halogénés sont des polymères du chlorure de vinylidène.

6. Dispersion aqueuse de polymères vinyliques halogénés, **caractérisée en ce que** la dispersion aqueuse contient un agent basique choisi parmi les phosphates de métaux alcalins, les mélanges de ceux-ci entre eux ou avec un autre agent basique, en quantité telle que le pH est inférieur à 5.

7. Dispersion aqueuse de polymères vinyliques halogénés selon la revendication 6, **caractérisée en ce que** l'agent basique est le phosphate trisodique.

8. Dispersion aqueuse de polymères vinyliques halogénés selon l'une quelconque des revendications 6 à 7, **caractérisée en ce que** le pH de la dispersion aqueuse est supérieur à 2.

9. Dispersion aqueuse de polymères vinyliques halogénés selon l'une quelconque des revendications 6 à 8, **caractérisée en ce que** la dispersion contient en outre une cire.

10. Dispersion aqueuse de polymères vinyliques halogénés selon l'une quelconque des revendications 6 à 9, **caractérisée en ce que** les polymères vinyliques halogénés sont des polymères contenant du chlore.

11. Dispersion aqueuse de polymères vinyliques halogénés selon l'une quelconque des revendications 6 à 10, **caractérisée en ce que** les polymères vinyliques halogénés sont des polymères du chlorure de vinylidène.

12. Utilisation d'une dispersion aqueuse de polymères vinyliques halogénés selon l'une quelconque des revendications 6 à 11 pour l'enduction de substrats polymères, en papier ou en cellulose régénérée.

13. Utilisation d'une dispersion aqueuse de polymères vinyliques halogénés selon la revendication 12 pour la réalisation de blisters pharmaceutiques.

## Patentansprüche

1. Verfahren zur Herstellung einer wäßrigen Dispersion von halogenierten Vinylpolymeren durch Polymerisation, **dadurch gekennzeichnet, daß** man nach der Polymerisation ein unter den Alkalimetallphosphaten, deren Gemischen untereinander oder mit einem anderen basischen Mittel ausgewähltes basisches Mittel in einer solchen Menge zusetzt, daß der pH-Wert der wäßrigen Dispersion unter 5 beträgt.

2. Verfahren zur Herstellung einer wäßrigen Dispersion von halogenierten Vinylpolymeren nach Anspruch 1, **dadurch gekennzeichnet, daß** das basische Mittel Trinatriumphosphat ist.

3. Verfahren zur Herstellung einer wäßrigen Dispersion von halogenierten Vinylpolymeren nach einem der Ansprüche 1 bis 2, **dadurch gekennzeichnet, daß** der pH-Wert der wäßrigen Dispersionüber 2 beträgt.

4. Verfahren zur Herstellung einer wäßrigen Dispersion von halogenierten Vinylpolymeren nach einem der Ansprüche 1 bis 3, **dadurch gekennzeichnet, daß** die halogenierten Vinylpolymere Chlor enthaltende Polymere sind.

5. Verfahren zur Herstellung einer wäßrigen Dispersion von halogenierten Vinylpolymeren nach einem der Ansprüche 1 bis 4, **dadurch gekennzeichnet, daß** die halogenierten Vinylpolymere Vinylidenchloridpolymere sind.

6. Wäßrige Dispersion von halogenierten Vinylpolymeren, **dadurch gekennzeichnet, daß** die Dispersion ein unter den Alkalimetallphosphaten, deren Gemischen untereinander oder mit einem anderen basischen Mittel ausgewähltes basisches Mittel in einer solchen Menge enthält, daß der pH-Wert unter 5 beträgt.

7.Wäßrige Dispersion von halogenierten Vinylpolymeren nach Anspruch 6, **dadurch gekennzeichnet, daß** das basische Mittel Trinatriumphosphat ist.

8. Wäßrige Dispersion von halogenierten Vinylpolymeren nach einem der Ansprüche 6 bis 7, **dadurch gekennzeichnet, daß** der pH-Wert der wäßrigen Dispersionüber 2 beträgt.

9. Wäßrige Dispersion von halogenierten Vinylpolymeren nach einem der Ansprüche 6 bis 8, **dadurch gekennzeichnet, daß** die Dispersion zusätzlich ein Wachs enthält.

10. Wäßrige Dispersion von halogenierten Vinylpolymeren nach einem der Ansprüche 6 bis 9, **dadurch gekennzeichnet, daß** die halogenierten Vinylpolymere Chlor enthaltende Polymere sind.

11. Wäßrige Dispersion von halogenierten Vinylpolymeren nach einem der Ansprüche 6 bis 10, **dadurch gekennzeichnet, daß** die halogenierten Vinylpolymere Vinylidenchloridpolymere sind.

12. Verwendung einer wäßrigen Dispersion von halogenierten Vinylpolymeren nach einem der Ansprüche 6 bis 11 zum Beschichten von Substraten aus Polymeren, Papier oder regenerierter Zellulose.

13. Verwendung einer wäßrigen Dispersion von halogenierten Vinylpolymeren nach Anspruch 12 zur Ausbildung von pharmazeutischen Blisterverpackungen:

## Claims

1. Process for the preparation of an aqueous dispersion of halogenated vinyl polymers by polymerization, **characterized in that**, after polymerization, a basic agent chosen from alkali metal phosphates or mixtures of these with one another or with another basic agent is added in an amount such that the pH of the aqueous dispersion is less than 5.

2. Process for the preparation of an aqueous dispersion of halogenated vinyl polymers according to Claim 1, **characterized in that** the basic agent is trisodium phosphate.

3. Process for the preparation of an aqueous dispersion of halogenated vinyl polymers according to either one of Claims 1 and 2, **characterized in that** the pH of the aqueous dispersion is greater than 2.

4. Process for the preparation of an aqueous dispersion of halogenated vinyl polymers according to any one of Claims 1 to 3, **characterized in that** the halogenated vinyl polymers are polymers comprising chlorine.

5. Process for the preparation of an aqueous dispersion of halogenated vinyl polymers according to any one of Claims 1 to 4, **characterized in that** the halogenated vinyl polymers are vinylidene chloride polymers.

6. Aqueous dispersion of halogenated vinyl polymers, **characterized in that** the aqueous dispersion comprises a basic agent chosen from alkali metal phosphates or mixtures of these with one another or with another basic agent in an amount such that the pH is less than 5.

7. Aqueous dispersion of halogenated vinyl polymers according to Claim 6, **characterized in that** the basic agent is trisodium phosphate.

8. Aqueous dispersion of halogenated vinyl polymers according to either one of Claims 6 and 7, **characterized in that** the pH of the aqueous dispersion is greater than 2.

9. Aqueous dispersion of halogenated vinyl polymers according to any one of Claims 6 to 8, **characterized in that** the dispersion additionally comprises a wax.

10. Aqueous dispersion of halogenated. vinyl polymers according to any one of Claims 6 to 9, **characterized in that** the halogenated vinyl polymers are polymers comprising chlorine.

11. Aqueous dispersion of halogenated vinyl polymers according to any one of Claims 6 to 10, **characterized in that** the halogenated vinyl polymers are vinylidene chloride polymers.

12. Use of an aqueous dispersion of halogenated vinyl polymers according to any one of Claims 6 to 11 for the coating of polymer substrates, paper substrates or regenerated cellulose substrates.

13. Use of an aqueous dispersion of halogenated vinyl polymers according to Claim 12 for the preparation of pharmaceutical blister packs.
